(19) Europäisches Patentamt
European Patent Office
Office européen des brevets

(11) **EP 4 586 651 A1**

(12) **EUROPEAN PATENT APPLICATION**
published in accordance with Art. 153(4) EPC

(43) Date of publication:
**16.07.2025   Bulletin 2025/29**

(21) Application number: **23876401.3**

(22) Date of filing: **05.09.2023**

(51) International Patent Classification (IPC):
*H04W 4/02* $^{(2018.01)}$

(52) Cooperative Patent Classification (CPC):
**H04W 4/02; H04W 24/08; H04W 24/10; H04W 72/542**

(86) International application number:
**PCT/CN2023/116934**

(87) International publication number:
**WO 2024/078196 (18.04.2024 Gazette 2024/16)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **09.10.2022   CN 202211231689**
**21.11.2022   CN 202211457230**

(71) Applicant: **Huawei Technologies Co., Ltd.**
**Shenzhen, Guangdong 518129 (CN)**

(72) Inventors:
• **LI, Jun**
**Shenzhen, Guangdong 518129 (CN)**
• **LI, Xueru**
**Shenzhen, Guangdong 518129 (CN)**
• **LI, Chao**
**Shenzhen, Guangdong 518129 (CN)**

(74) Representative: **Gill Jennings & Every LLP**
**The Broadgate Tower**
**20 Primrose Street**
**London EC2A 2ES (GB)**

(54) **POSITIONING METHOD AND COMMUNICATION DEVICE**

(57)     This application provides a positioning method and a communication apparatus. The method can be applied to the field of sidelink (sidelink, SL) positioning. The method includes: A second communication apparatus sends a first signal to a first communication apparatus, where the first signal is used for positioning between the first communication apparatus and the second communication apparatus; receives a first measurement report from the first communication apparatus, where the first measurement report includes a first measurement value and a first symbol index, and the first symbol index indicates a symbol on which the first measurement value is obtained; receives a second signal from the first communication apparatus, where the second signal is used for positioning between the first communication apparatus and the second communication apparatus; measures the second signal to obtain a second measurement report, where the second measurement report includes a third measurement value; and determines time of flight between the first communication apparatus and the second communication apparatus based on a first relationship, the first measurement value, the third measurement value, and the first symbol index, where the first relationship indicates a relationship between a clock crystal oscillator error of the first communication apparatus and a clock crystal oscillator error of the second communication apparatus. According to the foregoing technical solution, positioning precision can be improved in this application.

EP 4 586 651 A1

| First communication apparatus | | Second communication apparatus |
| --- | --- | --- |

S300a: Send indication information 1, where the indication information 1 indicates to obtain a measurement value A on a symbol indicated by a symbol index A, and obtain a measurement value B on a symbol indicated by a symbol index B

S300b: Send information 1, where the information 1 is used to schedule a first resource, and the first resource is used to transmit a first signal

S310: Send the first signal, where the first signal is used for positioning between the first communication apparatus and the second communication apparatus

S320: Measure the first signal to obtain a measurement report 1, where the measurement report 1 includes the symbol index A and the measurement value A

S330: Send the measurement report 1

S340a: Send information 2, where the information 2 is used to schedule a second resource, and the second resource is used to transmit a second signal

S340: Send the second signal, where the second signal is used for positioning between the first communication apparatus and the second communication apparatus

S350: Measure the second signal to obtain a measurement report 2, where the measurement report 2 includes a measurement value C

S360: Determine time of flight between the first communication apparatus and the second communication apparatus based on a first relationship, the symbol index A, the measurement value A, and the measurement value C

FIG. 3

**Description**

This application claims priorities to Chinese Patent Application No. 202211457230.1, filed with the China National Intellectual Property Administration on November 21, 2022 and entitled "POSITIONING METHOD AND COMMUNICATION APPARATUS", and to Chinese Patent Application No. 202211231689.X, filed with the China National Intellectual Property Administration on October 9, 2022 and entitled "METHOD FOR TRANSMITTING MEASUREMENT REPORT", both of which are incorporated herein by reference in their entireties.

**TECHNICAL FIELD**

This application relates to the field of communication technologies, and more specifically, to a positioning method and a communication apparatus.

**BACKGROUND**

The 5th generation mobile communication technology is under standardization of sidelink (sidelink, SL) positioning. Performance of a conventional positioning solution like a time difference of arrival (time difference of arrival, TDOA) or round-trip time (round-trip time, RTT) in an SL scenario needs to be re-evaluated.

The RTT solution is used as an example. Although the RTT solution does not require strict synchronization between devices, due to a clock drift phenomenon, a device for sending a positioning reference signal (positioning reference signal, PRS) generates a time deviation for recording of sending time of the PRS, and a device for measuring the PRS generates a time deviation for recording of receiving time of the PRS. The two time deviations affect positioning precision of the RTT solution.

**SUMMARY**

This application provides a positioning method and a communication apparatus, to improve positioning precision.

According to a first aspect, a positioning method is provided, including: sending a first signal to a first communication apparatus, where the first signal is used for positioning between the first communication apparatus and a second communication apparatus; receiving a first measurement report of the first signal from the first communication apparatus, where the first measurement report includes a first measurement value and a first symbol index, and the first symbol index indicates a symbol on which the first communication apparatus obtains the first measurement value; receiving a second signal from the first communication apparatus, where the second signal is used for positioning between the first communication apparatus and the second communication apparatus; measuring the second signal to obtain a second measurement report of the second signal, where the second measurement report includes a third measurement value; and determining time of flight between the first communication apparatus and the second communication apparatus based on a first relationship, the first measurement value, the third measurement value, and the first symbol index, where the first relationship indicates a relationship between a clock crystal oscillator error of the first communication apparatus and a clock crystal oscillator error of the second communication apparatus.

Specifically, that the first symbol index indicates the symbol on which the first communication apparatus obtains the first measurement value may be that the first communication apparatus measures the first signal on the symbol indicated by the first symbol index, to obtain the first measurement value.

It should be understood that the first relationship may be determined by the second communication apparatus based on a plurality of previous positioning measurements with the first communication apparatus, or may be determined in another manner. Details are not described herein. Therefore, in the foregoing technical solution, on the premise that the first relationship is known, the second communication apparatus can determine the time of flight between the first communication apparatus and the second communication apparatus based on the first measurement value, the first symbol index, and the third measurement value.

The symbol index is added to the measurement report, the second communication apparatus (which is an execution body of the foregoing technical solution) can obtain information of a location of the symbol on which the first communication apparatus obtains the first measurement value, so that when the time of flight between the first communication apparatus and the second communication apparatus is determined, the first measurement value is converted into a measurement result corresponding to the second communication apparatus based on the relationship between the clock crystal oscillator error of the first communication apparatus and the clock crystal oscillator error of the second communication apparatus, thereby reducing impact of a clock drift error on a positioning measurement result, and improving positioning precision.

In a possible implementation, the method further includes: sending indication information to the first communication apparatus, where the indication information indicates the first communication apparatus to obtain the first measurement value on the symbol indicated by the first symbol index, and obtain a second measurement value on a symbol indicated by a second symbol index, where the second symbol index indicates the symbol on which the first communication apparatus obtains the second measurement value.

In this way, the first communication apparatus reports the first measurement value, the first symbol index, the second measurement value, and the second symbol index to the second communication apparatus based on the indication information of the second communication apparatus. This helps the second communication apparatus determine the relationship between the clock crystal oscillator error of the first communication apparatus and the clock crystal oscillator error of the second communication apparatus based on a plurality of measurement values and a plurality of symbol indexes that are reported by the first communication apparatus.

In a possible implementation, the indication information further includes the first symbol index and the second symbol index.

In this way, the first communication apparatus separately measures the first signal on the two symbols indicated by the second communication apparatus, and obtains the two measurement values.

In a possible implementation, the first measurement report further includes the second measurement value and the second symbol index; and the first measurement value, the first symbol index, the second measurement value, and the second symbol index are used to determine the first relationship.

As described above, the first relationship may be determined by the second communication apparatus in the another manner, and the another manner may include that the first measurement report carries a plurality of measurement values and a plurality of symbol indexes. Correspondingly, the second communication apparatus obtains, through calculation, the relationship between the clock crystal oscillator error of the first communication apparatus and the clock crystal oscillator error of the second communication apparatus, namely, the first relationship based on the plurality of measurement values and the plurality of symbol indexes that are carried in the first measurement report. Further, the second communication apparatus determines the time of flight between the first communication apparatus and the second communication apparatus based on the first relationship obtained through calculation based on the plurality of measurement values and the plurality of symbol indexes, the first measurement value, the first symbol index, and the third measurement value.

In conclusion, the plurality of measurement values and the plurality of symbol indexes are reported, and each measurement value corresponds to one symbol index. The second communication apparatus determines the relationship between the clock crystal oscillator error of the first communication apparatus and the clock crystal oscillator error of the second communication apparatus based on the plurality of measurement values and the plurality of symbol indexes that are reported by the first communication apparatus, to determine the time of flight between the first communication apparatus and the second communication apparatus.

In a possible implementation, the first measurement report includes a first structure and a second structure; the first structure is used to carry the first measurement value; and the first symbol index is carried in the first structure or the second structure.

In this way, compatibility with an existing measurement report can be implemented.

In a possible implementation, the first measurement report further includes the second symbol index and the second measurement value; the first structure is further used to carry the second measurement value; and the second symbol index is carried in the first structure or the second structure.

In this way, compatibility with the existing measurement report can be implemented.

In a possible implementation, the method further includes: sending first information to the first communication apparatus, where the first information is used to schedule a first resource, the first resource is used to transmit the first signal, and the first resource includes the symbol indicated by the first symbol index.

In a possible implementation, the first resource further includes the symbol indicated by the second symbol index.

In a possible implementation, the method further includes: receiving second information from the first communication apparatus, where the second information is used to schedule a second resource, and the second resource is used to transmit the second signal.

In a possible implementation, the first measurement report further includes a slot identifier, and the slot identifier indicates a receiving slot of the first signal.

In a possible implementation, the first signal includes a first sub-signal and a second sub-signal, and the first sub-signal and the second sub-signal are located in a same slot.

Specifically, when the first signal uses a configuration form of a plurality of sub-signals, in this application, when the first communication apparatus is supported in reporting the measurement report to the second communication apparatus, the measurement report includes a measurement value corresponding to each sub-signal. The measurement report may further include a symbol index and/or a sub-signal index corresponding to the measurement value.

According to a second aspect, a positioning method is provided, including: receiving a first signal from a second communication apparatus, where the first signal is used for positioning between a first communication apparatus and the second communication apparatus; measuring the first signal to obtain a first measurement report of the first signal, where the first measurement report includes a first measurement value and a first symbol index, and the first symbol index indicates a symbol on which the first communication apparatus obtains the first measurement value; sending the first measurement report to the second communication apparatus; and sending a second signal to the second communication apparatus, where the second signal is used for positioning between the first communication apparatus and the second communication apparatus.

In a possible implementation, the method further includes: receiving indication information from the second communication apparatus, where the indication information indicates the first communication apparatus to obtain the first measurement value on the symbol indicated by the first symbol index, and obtain a second measurement value on a symbol indicated by a second symbol index, where the second symbol index indicates the symbol on which the first communication apparatus obtains the second measurement value.

In a possible implementation, the indication information further includes the first symbol index and the second symbol index.

In a possible implementation, the first measurement report further includes the second measurement value and the second symbol index; and the first measurement value, the first symbol index, the second measurement value, and the second symbol index are used to determine the first relationship.

In a possible implementation, the first measurement report includes a first structure and a second structure; the first structure is used to carry the first measurement value; and the first symbol index is carried in the first structure or the second structure.

In a possible implementation, the first measurement report further includes a second symbol index and a second measurement value, the first structure is further used to carry the second measurement value; and the second symbol index is carried in the first structure or the second structure.

In a possible implementation, the method further includes: receiving first information from the second communication apparatus, where the first information is used to schedule a first resource, the first resource is used to transmit the first signal, and the first resource includes the symbol indicated by the first symbol index.

In a possible implementation, the first resource further includes the symbol indicated by the second symbol index.

In a possible implementation, the method further includes: sending second information to the second communication apparatus, where the second information is used to schedule a second resource, and the second resource is used to transmit the second signal.

In a possible implementation, the first measurement report further includes a slot identifier, and the slot identifier indicates a receiving slot of the first signal.

In a possible implementation, the first signal includes a first sub-signal and a second sub-signal, and the first sub-signal and the second sub-signal are located in a same slot.

According to a third aspect, a communication apparatus is provided, including: a transceiver unit, configured to send a first signal to a first communication apparatus, where the first signal is used for positioning between the first communication apparatus and the communication apparatus, where the transceiver unit is further configured to receive a first measurement report of the first signal from the first communication apparatus, where the first measurement report includes a first measurement value and a first symbol index, and the first symbol index indicates a symbol on which the first communication apparatus obtains the first measurement value, and the transceiver unit is further configured to receive a second signal from the first communication apparatus, where the second signal is used for positioning between the first communication apparatus and the communication apparatus; and a processing unit, configured to measure the second signal to obtain a second measurement report of the second signal, where the second measurement report includes a third measurement value, where the processing unit is further configured to determine time of flight between the first communication apparatus and the communication apparatus based on a first relationship, the first measurement value, the third measurement value, and the first symbol index, where the first relationship indicates a relationship between a clock crystal oscillator error of the first communication apparatus and a clock crystal oscillator error of the communication apparatus.

In a possible implementation, the transceiver unit is further configured to send indication information to the first communication apparatus, where the indication information indicates the first communication apparatus to obtain the first measurement value on the symbol indicated by the first symbol index, and obtain a second measurement value on a symbol indicated by a second symbol index, where the second symbol index indicates the symbol on which the first communication apparatus obtains the second measurement value.

In a possible implementation, the indication information further includes the first symbol index and the second symbol index.

In a possible implementation, the first measurement report further includes the second measurement value and the second symbol index; and the first measurement value, the first symbol index, the second measurement value, and the second symbol index are used to determine the first relationship.

In a possible implementation, the first measurement report includes a first structure and a second structure; the first structure is used to carry the first measurement value; and the first symbol index is carried in the first structure or the second structure.

In a possible implementation, the first measurement report further includes the second symbol index and the second measurement value; the first structure is further used to carry the second measurement value; and the second symbol index is carried in the first structure or the second structure.

In a possible implementation, the transceiver unit is further configured to send first information to the first communication apparatus, where the first information is used to schedule a first resource, the first resource is used to transmit the first signal, and the first resource includes a symbol indicated by the first symbol index.

In a possible implementation, the first resource further includes the symbol indicated by the second symbol index.

In a possible implementation, the transceiver unit is further configured to receive second information from the first communication apparatus, where the second information is used to schedule a second resource, and the second resource is used to transmit the second signal.

In a possible implementation, the first measurement report further includes a slot identifier, and the slot identifier indicates a receiving slot of the first signal.

In a possible implementation, the first signal includes a first sub-signal and a second sub-signal, and the first sub-signal and the second sub-signal are located in a same slot.

According to a fourth aspect, a communication apparatus is provided, including: a transceiver unit, configured to receive a first signal from a second communication apparatus, where the first signal is used for positioning between the communication apparatus and the second communication apparatus; and a processing unit, configured to measure the first signal to obtain a first measurement report of the first signal, where the first measurement report includes a first measurement value and a first symbol index, and the first symbol index indicates a symbol on which the communication apparatus obtains the first measurement value, where the transceiver unit is further configured to send the first measurement report to the second communication apparatus, and the transceiver unit is further configured to send a second signal to the second communication apparatus, where the second signal is used for positioning between the second communication apparatus and the communication apparatus.

In a possible implementation, the transceiver unit is further configured to receive indication information from the second communication apparatus, where the indication information indicates the communication apparatus to obtain the first measurement value on the symbol indicated by the first symbol index, and obtain a second measurement value on a symbol indicated by a second symbol index, where the second symbol index indicates the symbol on which the communication apparatus obtains the second measurement value.

In a possible implementation, the indication information further includes the first symbol index and the second symbol index.

In a possible implementation, the first measurement report further includes the second measurement value and the second symbol index; and the first measurement value, the first symbol index, the second measurement value, and the second symbol index are used to determine the first relationship.

In a possible implementation, the first measurement report includes a first structure and a second structure, the first structure is used to carry the first measurement value; and the first symbol index is carried in the first structure or the second structure.

In a possible implementation, the first measurement report further includes the second symbol index and the second measurement value; the first structure is further used to carry the second measurement value; and the second symbol index is carried in the first structure or the second structure.

In a possible implementation, the transceiver unit is further configured to receive first information from the second communication apparatus, where the first information is used to schedule a first resource, the first resource is used to transmit the first signal, and the first resource includes the symbol indicated by the first symbol index.

In a possible implementation, the first resource further includes the symbol indicated by the second symbol index.

In a possible implementation, the transceiver unit is further configured to send second information to the second communication apparatus, where the second information is used to schedule a second resource, and the second resource is used to transmit the second signal.

In a possible implementation, the first measurement report further includes a slot identifier, and the slot identifier indicates a receiving slot of the first signal.

In a possible implementation, the first signal includes a first sub-signal and a second sub-signal, and the first sub-signal and the second sub-signal are located in a same slot.

According to a fifth aspect, a communication apparatus is provided, including a processor. The processor is configured to enable, by executing a computer program or instructions or by using a logic circuit, the communication apparatus to perform the method according to the first aspect and any one of the possible implementations of the first aspect, or perform the method according to the second aspect and any one of the possible implementations of the second aspect.

In a possible implementation, the communication apparatus further includes a memory, and the memory is configured to store the computer program or the instructions.

In a possible implementation, the communication apparatus further includes a communication interface, and the communication interface is configured to input and/or output a signal.

According to a sixth aspect, a communication apparatus is provided, including a logic circuit and an input/output interface. The input/output interface is configured to input and/or output a signal. The logic circuit is configured to perform the method according to the first aspect and any one of the possible implementations of the first aspect, or the logic circuit is configured to perform the method according to the second aspect and any one of the possible implementations of the second aspect.

According to a seventh aspect, a computer-readable storage medium is provided, including a computer program or instructions. When the computer program or the instructions are run on a computer, the method according to the first aspect and any one of the possible implementations of the first aspect is performed, or the method according to the second aspect and any one of the possible implementations of the second aspect is performed.

According to an eighth aspect, a computer program product is provided, including instructions. When the instructions are run on a computer, the method according to the first aspect and any one of the possible implementations of the first aspect is performed, or the method according to the second aspect and any one of the possible implementations of the second aspect is performed.

According to a ninth aspect, a computer program is provided. When the computer program is run on a computer, the method according to the first aspect and any one of the possible implementations of the first aspect is performed, or the method according to the second aspect and any one of the possible implementations of the second aspect is performed.

According to a tenth aspect, a communication system is provided. The communication system includes a first communication apparatus and a second communication apparatus. The second communication apparatus is configured to perform the method according to the first aspect and any one of the possible implementations of the first aspect, and the first communication apparatus is configured to perform the method according to the second aspect and any one of the possible implementations of the second aspect.

For descriptions of beneficial effect of the second aspect to the tenth aspect, refer to the descriptions of the beneficial effect of the first aspect.

**BRIEF DESCRIPTION OF DRAWINGS**

FIG. 1 is a diagram of a communication system 100 to which an embodiment of this application is applicable;

FIG. 2 is a diagram of a positioning method 200;

FIG. 3 is a schematic interaction flowchart of a positioning method 300 according to an embodiment of this application;

FIG. 4 is a diagram of configurations of a first sub-signal and a second sub-signal;

FIG. 5 is a block diagram of a structure of a communication apparatus 500 according to an embodiment of this application;

FIG. 6 is a block diagram of a structure of a communication apparatus 600 according to an embodiment of this application;

FIG. 7 is a block diagram of a structure of a communication apparatus 700 according to an embodiment of this application;

FIG. 8 is a block diagram of a structure of a communication apparatus 800 according to an embodiment of this application; and

FIG. 9 is a block diagram of a structure of a communication apparatus 900 according to an embodiment of this application.

**DESCRIPTION OF EMBODIMENTS**

The following describes technical solutions of this application with reference to accompanying drawings.

The technical solutions in embodiments of this application may be applied to various communication systems, for example, a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a 5th generation (5th generation, 5G) system like a new radio (new radio, NR) system, a 5.5G system, or a system evolved after 5G like a 6th generation (6th generation, 6G) system.

Application scenarios of this application include but are not limited to scenarios such as terrestrial cellular communication, a non-terrestrial network (non-terrestrial network, NTN), vehicle-to-everything (vehicle-to-everything, V2X), integrated access and backhaul (integrated access and backhaul, IAB), and reconfigurable intelligent surface (reconfigurable intelligent surface, RIS) communication. The NTN system includes a non-terrestrial device, and the non-terrestrial device may be used as a base station, may be used as a terminal device, or may be used as a relay device. The non-terrestrial device may be an unmanned aerial vehicle, a hot air balloon, a low-earth orbit satellite, a medium-earth orbit satellite, a high-earth orbit satellite, a high altitude platform station (high altitude platform station, HAPS) device, or the like.

The technical solutions in embodiments of this application are applicable to both a homogeneous network scenario and a heterogeneous network scenario. In addition, a transmitting point is not limited. Coordinated multipoint transmission may be performed between macro base stations, between micro base stations, and between a macro base station and a micro base station. The technical solutions in embodiments of this application are applicable to an FDD/TDD system. The technical solutions in embodiments of this application are applicable to not only a low-frequency scenario (sub 6G), but also a high-frequency scenario (above 6 GHz), terahertz, optical communication, and the like. The technical solutions in embodiments of this application are applicable to not only communication between a network device and a terminal, but also communication between network devices, communication between terminals, communication in the internet of vehicles, communication in the internet of things, communication in the industrial internet, and the like.

The technical solutions in embodiments of this application may be applied to a scenario in which a terminal is connected to a single base station. A base station connected to the terminal and a core network (core network, CN) connected to the base station are of a same standard or different standards. For example, the CN is a 5G CN, the base station is a 5G base station, and the 5G base station is directly connected to the 5G CN; the CN is a 5G CN, the base station is a 4G base station, and the 4G base station is directly connected to a 5G Core; the CN is a 4G CN, the base station is a 4G base station, and the 4G base station is directly connected to the 4G CN; or the CN is a 6G CN, the base station is a 6G base station, and the 6G base station is directly connected to the 6G CN. The technical solutions in embodiments of this application are also applicable to a dual connectivity (dual connectivity, DC) scenario in which the terminal is connected to at least two base stations.

The terminal device in embodiments of this application may be a device having a wireless transceiver function, and may be user equipment (user equipment, UE), an access terminal, a subscriber unit (subscriber unit), a subscriber station, a mobile station (mobile station), a remote station, a remote terminal, a mobile device, a user terminal, a wireless communication device, a user agent, or a user apparatus. The terminal device may alternatively be a satellite phone, a cellular phone, a smartphone, a wireless data card, a wireless modem, or a machine-type communication device, or may be a cordless phone, a session initiation protocol (session initiation protocol, SIP) phone, a wireless local loop (wireless local loop, WLL) station, a personal digital assistant (personal digital assistant, PDA), customer-premises equipment (customer-premises equipment, CPE), a smart point of sale (point of sale, POS) machine, a handheld device having a wireless communication function, a computing device or another processing device connected to a wireless modem, a vehicle-mounted device, a communication device carried on a high-altitude aircraft, a wearable device, an unmanned aerial vehicle, a robot, a terminal in device-to-device (device-to-device, D2D) communication, a terminal in V2X, a virtual reality (virtual reality, VR) terminal device, an augmented reality (augmented reality, AR) terminal device, a wireless terminal in industrial control (industrial control), a wireless terminal in self driving (self driving), a wireless terminal in telemedicine (telemedicine), a wireless terminal in a smart grid (smart grid), a wireless terminal in transportation safety (transportation safety), a wireless terminal in a smart city (smart city), a wireless terminal in a smart home (smart home), a terminal device in a communication network evolved after 5G, or the like. This is not limited in embodiments of this application.

In embodiments of this application, an apparatus configured to implement a function of the terminal device may be a terminal device, or may be an apparatus that can support the terminal device in implementing the function, for example, a chip system. The apparatus may be installed in the terminal device or used together with the terminal device. In embodiments of this application, the chip system may include a chip, or may include a chip and another discrete component.

The network device in embodiments of this application is a device having a wireless transceiver function, and is an access network device configured to communicate with the terminal device. The access network device may be a node in a radio access network (radio access network, RAN), and may be referred to as a base station, or may be referred to as a RAN node. Alternatively, the access network device may be a device having some or all functions of a base station. For example, when a base station uses a central unit (central unit, CU) and a distributed unit (distributed unit, DU) architecture, the access network device may include the CU and/or the DU. The access network device may be an evolved NodeB (evolved NodeB, eNB or eNodeB) in LTE, a base station in a 5G network like a next generation NodeB (gNodeB, gNB), a base station in a public land mobile network (public land mobile network, PLMN) evolved after 5G, a broadband network gateway (broadband network gateway, BNG), an aggregation switch, a 3rd generation partnership project (3rd generation partnership project, 3GPP) access device, or the like.

The network device in embodiments of this application may further include various forms of base stations, for example, a macro base station, a micro base station (also referred to as a small cell), a relay station, a transmitting and receiving point (transmitting and receiving point, TRP), a transmitting point (transmitting point, TP), a mobile switching center, and a device that undertakes a base station function in device-to-device (device-to-device, D2D), vehicle-to-everything (vehicle-to-everything, V2X), and machine-to-machine (machine, M2M) communication. The network device in the NTN communication system is not specifically limited in embodiments of this application.

In embodiments of this application, an apparatus configured to implement a function of the network device may be a network device, or may be an apparatus that can support the network device in implementing the function, for example, a chip system. The apparatus may be installed in the network device or used together with the network device. In embodiments of this application, the chip system may include a chip, or may include a chip and another discrete component.

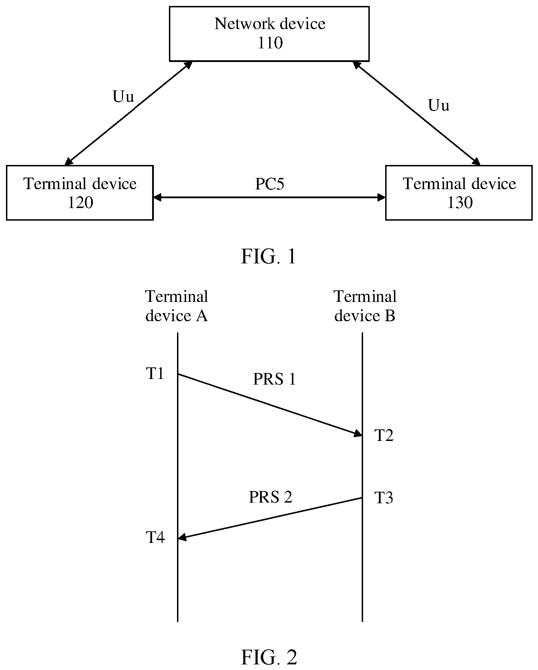

FIG. 1 is a diagram of a communication system 100 to which an embodiment of this application is applicable. As shown in FIG. 1, the communication system 100 includes a network device 110, a terminal device 120, and a terminal device 130. Quantities of terminal devices and network devices included in the communication system 100 are not limited in embodiments of this application. It should be understood that FIG. 1 is merely used as an example for understanding, and cannot limit the protection scope claimed in this application. The terminal device 120 and the terminal device 130 may be any terminal device listed above, and the network device 110 may be any network device listed above.

In the communication system 100, the terminal device 120 and the terminal device 130 may communicate with each other through a PC5 interface, that is, SL communication can be performed between the terminal device 120 and the terminal device 130. Alternatively, the terminal device 120 or the terminal device 130 may communicate with the network device 110 through an air interface (Uu).

Optionally, the network device 110 may be further connected to a location management function (location management function, LMF) (not shown in FIG. 1) by using an access and mobility management function (access and mobility management function, AMF) (not shown in FIG. 1 either), so that the LMF provides a location management function service for the communication system 100.

The following briefly describes technologies related to the technical solutions disclosed in this application.

FIG. 2 is a diagram of a positioning method 200. As shown in FIG. 2, a terminal device A sends a PRS 1 at time T1, and a terminal device B receives the PRS 1 at time T2; the terminal device B sends a PRS 2 at time T3, and the terminal device A receives the PRS 2 at time T4. The four pieces of time meet the following relationship: T4 is later than T3, T3 is later than T2, and T2 is later than T1.

A distance D between the terminal device A and the terminal device B is:

$$D = \text{TOF} * c \ (1)$$

In Formula (1), c indicates a flight speed (usually the speed of light) of a wireless signal, and TOF indicates time of flight (time of flight, TOF) between the terminal device A and the terminal device B. TOF is:

$$\text{TOF}=0.5 * (T_{round} - T_{reply}), \text{ where } T_{round} = (\text{T4} - \text{T1}), T_{reply} = (\text{T3} - \text{T2}) \ (2)$$

Due to existence of a clock drift phenomenon (a clock crystal oscillator error of the device is $e_1$, and if time t actually passes, time recorded by the device is $t(1+e_1)$), the terminal device A and the terminal device B each generate a deviation in recording sending and receiving time of the PRS. Therefore, the TOF should be expressed as:

$$\text{TOF} = 0.5 * \left| T_{round,1} * (1 + e_A) - T_{reply,1} * ((1 + e_B) \right|$$

$$= \text{TOF}_1 + 0.5 * (T_{round,1} * e_A - T_{reply,1} * e_B)$$

$$= \text{TOF}_1 + 0.5 * T_{reply,1} * (e_A - e_B) + \text{TOF}_1 * e_A, (3)$$

$\text{TOF}_1$ indicates real TOF, $T_{round,1}$ indicates real round-trip time, $T_{reply,1}$ indicates real response time, $e_A$ is a clock crystal oscillator error of the terminal device A, and $e_B$ is a clock crystal oscillator error of the terminal device B.

Usually, $e_A$ is at a $10^{-6}$ level, $\text{TOF}_1$ is at a nanosecond level, and $\text{TOF}_1 * e_A$ may be ignored. Because $T_{reply,1}$ is at a millisecond level, $0.5 * T_{reply,1} * (e_A - e_B)$ introduces a nanosecond-level error (a radio signal can be transmitted for 30 centimeters in one nanosecond). Therefore, there is a deviation between the distance D between the terminal device A and the terminal device B obtained according to Formula (3) and an actual distance between the terminal device A and the terminal device B.

Currently, a concept of a measurement quantity (UE Rx-Tx Time difference) is defined in the 3GPP protocol for the RTT solution. The measurement quantity is used to calculate TOF by indirectly indicating an interval between receiving time and sending time. Specifically, after receiving the PRS 1, the terminal device B measures first-path time of arrival of the PRS 1, and determines, based on the first-path time of arrival, start time ($T_{UE-RX}$) of a receiving subframe of the PRS 1.

Then, the terminal device B finds a sending subframe closest to the receiving subframe of the PRS 1, and obtains start time ($T_{UE-TX}$) of the sending subframe. Therefore, the terminal device B determines that the UE Rx-Tx time difference (denoted as $\Delta t_B$) is equal to $T_{UE-RX}-T_{UE-TX}$. Similarly, the terminal device B sends the PRS 2 to the terminal device A, and the terminal device A determines a new UE Rx-Tx time difference based on the PRS 2, which is denoted as $\Delta t\_A$. In this case, TOF=$0.5*|\Delta t_A-\Delta t_B|$.

Due to the clock drift phenomenon, there is a deviation between first-path time of arrival measured by the terminal device B on different symbols in one slot. For example, the terminal device B measures first-path time of arrival #1 on a second symbol in a slot #1, and measures first-path time of arrival #2 on a sixth symbol. Although there are only four symbols between the sixth symbol and the second symbol, due to the clock drift phenomenon, an actual time interval between the sixth symbol and the second symbol is not equal to a length of the four symbols. There is a deviation between the start time of the receiving subframe of the PRS 1 derived by the terminal device B based on the second symbol in the slot #1 and the start time of the receiving subframe of the PRS 1 derived based on the sixth symbol in the slot #1. However, the deviation is not reflected in a measurement report (measurement report, MR) reported by the terminal device B to the terminal device A. Consequently, the clock drift phenomenon affects accuracy of a positioning measurement result between the terminal device A and the terminal device B, and further affects positioning precision between the terminal device A and the terminal device B.

In view of the technical problem, this application provides a positioning method and a communication apparatus, to improve positioning precision.

The following describes the positioning method disclosed in embodiments of this application with reference to the accompanying drawings.

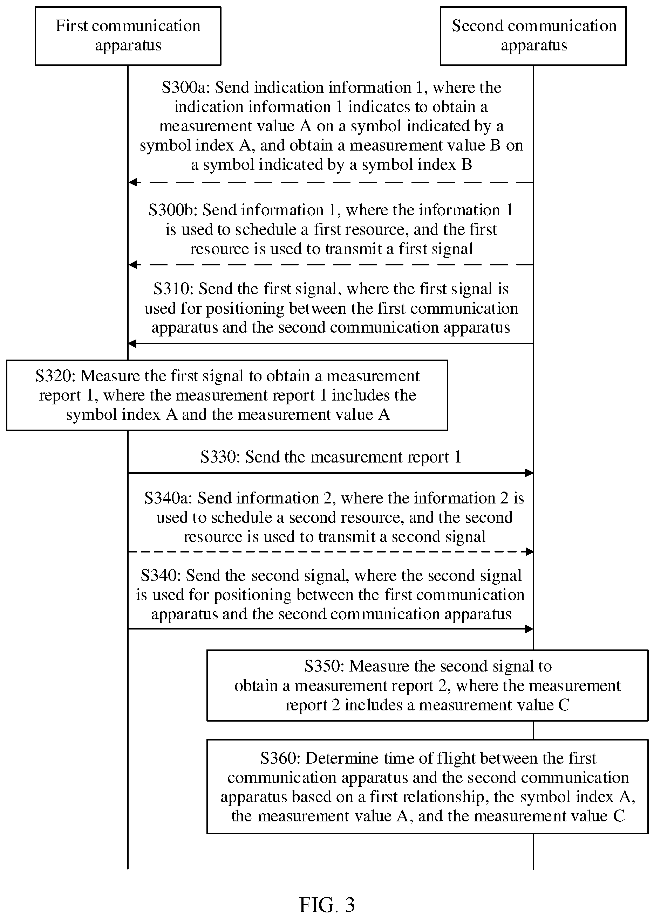

FIG. 3 is a schematic interaction flowchart of a positioning method 300 according to an embodiment of this application. For example, the method procedure in FIG. 3 may be performed by a first communication apparatus and a second communication apparatus, or may be performed by a module and/or a component (for example, a chip or an integrated circuit) that are/is installed in the first communication apparatus and the second communication apparatus and that have/has corresponding functions/a corresponding function. This is not limited in this application. In addition, the method procedure in FIG. 3 may also be performed by a first communication apparatus, a second communication apparatus, and a third communication apparatus, or may be performed by a module and/or a component (for example, a chip or an integrated circuit) that are/is installed in the first communication apparatus, the second communication apparatus, and the third communication apparatus and that have/has a corresponding function/corresponding functions. For ease of description, in this embodiment of this application, the method procedure in FIG. 3 is performed by the first communication apparatus and the second communication apparatus, but a scenario in which a plurality of communication apparatuses jointly perform the method shown in FIG. 3 is not limited. The first communication apparatus may be a terminal device or a network device, and the second communication apparatus may also be a terminal device or a network device. This is not limited in this application. In addition, this application is not only applicable to communication between a network device and a terminal device, but also applicable to communication between terminal devices, and may be further applicable to communication between network devices, communication between other devices, or the like. This is not limited in this application either. As shown in FIG. 3, the method 300 includes the following steps.

S310: The second communication apparatus sends a first signal to the first communication apparatus.

Correspondingly, the first communication apparatus receives the first signal from the second communication apparatus, and the first signal is used for positioning between the first communication apparatus and the second communication apparatus.

Specifically, the first signal sent by the second communication apparatus to the first communication apparatus is used to implement positioning between the first communication apparatus and the second communication apparatus. A type of the first signal is not limited in this application.

In a possible implementation, the type of the first signal includes a PRS, a sidelink positioning reference signal (sidelink positioning reference signal, SL-PRS), or the like. In addition, the type of the first signal may further include a type of a signal used to implement positioning in a future 3GPP standard or technology. This is not limited in this application.

S320: The first communication apparatus measures the first signal to obtain a measurement report 1, where the measurement report 1 includes a measurement value A (for example, a first measurement value) and a symbol index A (for example, a first symbol index).

The first communication apparatus may measure the first signal in an existing manner of measuring the first signal, or may measure the first signal in another manner. This is not limited in this application.

After completing the measurement of the first signal, the first communication apparatus obtains the measurement report 1 of the first signal. The measurement report 1 includes the measurement value A and the symbol index A. The measurement value A indicates a first measurement result obtained by the first communication apparatus by measuring the first signal. The symbol index A indicates a symbol on which the measurement value A is obtained. In other words, the symbol index A indicates a symbol S in a slot A. The first communication apparatus measures the first signal on the symbol S, and obtains the measurement value A. Optionally, the symbol index A indicates the symbol on which the first communication apparatus obtains the measurement value A.

It should be understood that, that the symbol index A indicates the symbol on which the measurement value A is obtained may be that the first communication apparatus measures the first signal on the symbol indicated by the symbol index A, to obtain the measurement value A.

In a possible implementation, the measurement report 1 may further include a slot identifier A, and the slot identifier A indicates that the first communication apparatus receives the first signal in a specific slot. In other words, the slot identifier A indicates a receiving slot of the first signal (indicated by a slot A below).

As described above, the first communication apparatus may obtain a plurality of pieces of different first-path time of arrival by performing measurement on different symbols in the slot A, and correspondingly, the first communication apparatus may also obtain a plurality of different measurement values. For relationships between different symbols in the slot A and different measurement values, see Table 1.

Table 1

| Symbol index | Measurement value |
|---|---|
| 0 | Measurement value 1 |
| 1 | Measurement value 2 |
| ... | ... |
| N | Measurement value n |

As shown in Table 1, different symbol indexes indicate different symbols. For example, the symbol index 0 indicates a first symbol in the slot A, the symbol index 1 indicates a second symbol in the slot A, ..., and the symbol index N indicates an $(N+1)^{th}$ symbol in the slot A. A difference between symbol indexes may indicate a quantity of spaced symbols between symbols corresponding to the symbol indexes. For example, if a difference between the symbol index 5 and the symbol index 1 is 4, it may indicate that a quantity of spaced symbols between a sixth symbol indicated by the symbol index 5 and the second symbol indicated by the symbol index 1 is 4. In addition, different symbol indexes correspond to different measurement values. For example, the symbol index 0 corresponds to the measurement value 1, the symbol index 1 corresponds to the measurement value 2, ..., and the symbol index N corresponds to the measurement value n. In conclusion, there is a correspondence between the symbol index and the measurement value (see Table 1).

S330: The first communication apparatus sends the measurement report 1 to the second communication apparatus.

Correspondingly, the second communication apparatus receives the measurement report 1 sent by the first communication apparatus.

S340: The first communication apparatus sends a second signal to the second communication apparatus, where the second signal is used for positioning between the second communication apparatus and the first communication apparatus.

Correspondingly, the second communication apparatus receives the second signal from the first communication apparatus, and measures the second signal to obtain a measurement report 2 of the second signal. The measurement report 2 includes a measurement value C (for example, a third measurement value).

It should be understood that, for related descriptions of measuring the second signal by the second communication apparatus, refer to the foregoing descriptions of measuring the first signal by the first communication apparatus. Details are not described herein again.

It may be understood that the second communication apparatus measures the second signal to obtain the measurement report 2. For example, the measurement report 2 may not include a symbol index, a slot identifier, or the like, and may include only the measurement value C. This is not limited in this application.

S350: The second communication apparatus determines time of flight between the first communication apparatus and the second communication apparatus based on a first relationship, the measurement value A, the measurement value C, and the symbol index A.

It should be understood that the first relationship indicates a relationship between a clock crystal oscillator error of the first communication apparatus and a clock crystal oscillator error of the second communication apparatus. The first relationship may be expressed in a form of $[(1+e_A)/(1+e_B)]$, $[T_a/T_b]$, or the like. This is not limited in this application.

In an example, the first relationship is determined by the second communication apparatus based on a plurality of previous positioning measurements with the first communication apparatus. In another example, the first relationship is determined by the second communication apparatus through calculation based on a plurality of measurement values and a plurality of symbol indexes that are reported by the first communication apparatus. The later example is further described below.

After completing the measurement of the second signal, the second communication apparatus obtains the measurement report 2 of the second signal, and determines a distance D between the first communication apparatus and the second communication apparatus according to Formula (4) with reference to the measurement report 1 of the first signal reported by the first communication apparatus.

$$\text{TOF} = 0.5 * \left| T_{round} - \frac{1 + e_A}{1 + e_B} \cdot T_{reply} \right|$$

$$= 0.5 * \left| T_{round,1} * (1 + e_A) - \frac{1 + e_A}{1 + e_B} T_{reply,1} * (1 + e_B) \right|$$

$$= (1 + e_A) * \text{TOF}_1 \ (4)$$

$T_{reply}$ is obtained by the second communication apparatus based on the measurement report 1, and $T_{round}$ is obtained by the second communication apparatus based on the measurement report 2. It can be learned from Formula (4) that TOF obtained by using Formula (4) introduces only an error of $e_A*\text{TOF}_1$. Because $e_A$ is at a $10^{-6}$ level, $\text{TOF}_1$ is at a nanosecond level, and $\text{TOF}_1*e_A$ may be ignored. Therefore, compared with Formula (3), the error of TOF obtained by using Formula (4) is smaller, and positioning precision can be improved.

In a possible implementation, the second communication apparatus obtains the relationship between the clock crystal oscillator error of the first communication apparatus and the clock crystal oscillator error of the first communication apparatus $\frac{1+e_A}{1+e_B}$. In this case, $T_{reply}$ in Formula (4) may be converted into time corresponding to a clock crystal oscillator of the second communication apparatus by using $\frac{1+e_A}{1+e_B}$, to obtain a positioning result with a smaller positioning error.

In another possible implementation, the second communication apparatus calculates $\frac{1+e_A}{1+e_B}$ in the manner in which the measurement report 1 carries the plurality of measurement values.

In still another possible implementation, this application also supports obtaining $\frac{1+e_A}{1+e_B}$ based on a plurality of measurement reports 1 (each measurement report 1 has only one measurement value), where $\frac{1+e_A}{1+e_B}$ may refer to the first relationship.

In a possible implementation, TOF in S350 may meet:

$$\text{TOF} = 0.5 * \left| T_{round} - \frac{1+e_A}{1+e_B} \cdot T_{reply} \right|, \ T_{round} = |\Delta t_A| + |\Delta t|, \ T_{reply} = |\Delta t_B| + |\Delta t| \ (5)$$

In Formula (5), $|\Delta t_A|$ indicates the measurement value C, and $|\Delta t_B|$ indicates the measurement value A. $\Delta t$ is a time interval between symbols separately determined by the symbol index A and a symbol index corresponding to the measurement value C. The second communication apparatus can determine the symbol corresponding to the measurement value C. Therefore, the second communication apparatus may determine the time of flight between the first communication apparatus and the second communication apparatus based on the measurement value A, the measurement value C, the symbol index A, and the symbol index corresponding to the measurement value C.

Specifically, after obtaining measurement symbol information of the measurement value A, the second communication apparatus reduces, based on the first relationship, impact of a clock drift phenomenon of the first communication apparatus on a positioning measurement result, may determine $T_{reply}$ with a small error of the first communication apparatus, and finally determine time of flight with a small error between the first communication apparatus and the second communication apparatus.

The symbol index is added to the measurement report, the second communication apparatus can obtain information of a location of the symbol on which the first communication apparatus obtains the first measurement value, so that when the time of flight between the first communication apparatus and the second communication apparatus is determined, the first measurement value is converted into a measurement result corresponding to the second communication apparatus based on the relationship between the clock crystal oscillator error of the first communication apparatus and the clock crystal oscillator error of the second communication apparatus, thereby reducing impact of the clock drift error on the positioning measurement result, and improving the positioning precision.

When the relationship between the clock crystal oscillator errors of the two terminal devices is obtained, if start time of actual measurement of the terminal device B can be obtained, the terminal device A can reduce the clock drift error caused by the several spaced symbols, thereby improving the positioning precision.

In a possible implementation, the measurement report 1 further includes a measurement value B (for example, a second measurement value) and a symbol index B (for example, a second symbol index). Specifically, the measurement report 1 reported by the first communication apparatus to the second communication apparatus may include the plurality of measurement values and the plurality of symbol indexes. For ease of description, in this application, an example in which the measurement report 1 includes the measurement value A, the symbol index A, the measurement value B, and the symbol index B is used for description. However, a scenario in which the measurement report 1 includes more measurement values and symbol indexes is not limited.

It should be understood that the plurality of measurement values and the plurality of symbol indexes that are reported by the first communication apparatus can be used by the second communication apparatus to determine the relationship between the clock crystal oscillator error of the first communication apparatus and the clock crystal oscillator error of the second communication apparatus. For example, the first communication apparatus separately measures the first signal on the first symbol and the second symbol in the slot A, to obtain the measurement value 1 and the measurement value 2. Each measurement value is associated with one symbol index. In this case, a form of the measurement report 1 may be shown in Table 2.

Table 2

| Measurement report 1 | |
| --- | --- |
| Symbol index 0 | Measurement value 1 |
| Symbol index 1 | Measurement value 2 |

As shown in Table 2, the first communication apparatus measures the first signal on the first symbol indicated by the symbol index 0, to obtain the measurement value 1; and the first communication apparatus measures the first signal on the second symbol indicated by the symbol index 1, to obtain the measurement value 2.

The second communication apparatus determines the relationship between the clock crystal oscillator error of the first communication apparatus and the clock crystal oscillator error of the second communication apparatus based on the measurement value 1, the measurement value 2, the symbol index 0, and the symbol index 1 that are reported by the first communication apparatus.

For example, it is assumed that an interval between the symbol index 1 and the symbol index 2 is time t, time corresponding to the measurement value 1 is time t1, and time corresponding to the measurement value 2 is time t2. The clock crystal oscillator error of the first communication apparatus is $e_A$, and the clock crystal oscillator error of the second communication apparatus is $e_B$. Therefore, the relationship between the clock crystal oscillator error $e_A$ of the first communication apparatus and the clock crystal oscillator error $e_B$ of the second communication apparatus is:

$$\frac{t + t_2 - t_1}{(1 + e_A)} = \frac{t}{(1 + e_B)} \quad (6)$$

For the second communication apparatus, the second communication apparatus sends only a PRS 1 (which is the first signal) to the first communication apparatus, and the first communication apparatus measures the PRS 1 twice on different symbols. This means that the second communication apparatus separately sends a PRS 11 to the first communication apparatus on the symbol indicated by the symbol index 1, and sends a PRS 12 to the first communication apparatus on the symbol indicated by the symbol index 2. Correspondingly, real time of a time interval between the PRS 11 and the PRS 12 that needs to be recorded by the second communication apparatus is equal to the left expression in Formula (6), and real time of a time interval between the PRS 11 and the PRS 12 that needs to be recorded by the first communication apparatus is equal to the right expression in Formula (6).

Due to the impact of the clock crystal oscillator error, an error time interval between the PRS 11 and the PRS 12 recorded by the second communication apparatus may be equal to a sum of $t$ and a difference between $t_2$ and $t_1$. Therefore, when real time intervals between the PRS 11 and the PRS 12 are the same, Formula (6) may be obtained.

In a possible implementation, before S310, the method 300 further includes the following step:

S300a: The second communication apparatus sends indication information 1 to the first communication apparatus, where the indication information 1 indicates to obtain a measurement value A on a symbol indicated by a symbol index A, and obtain a measurement value B on a symbol indicated by a symbol index B.

In this way, the first communication apparatus reports the measurement value A, the symbol index A, the measurement value B, and the symbol index B to the second communication apparatus based on the indication information 1 of the second communication apparatus. This helps the second communication apparatus determine the relationship between the clock crystal oscillator error of the first communication apparatus and the clock crystal oscillator error of the second communication apparatus based on a plurality of measurement values and a plurality of symbol indexes that are reported by the first communication apparatus. Correspondingly, the second communication apparatus determines the relationship between the clock crystal oscillator error of the first communication apparatus and the clock crystal oscillator error of the second communication apparatus based on the plurality of measurement values and the plurality of symbol indexes that are reported by the first communication apparatus. For details, refer to Formula (5). Details are not described herein again.

In a possible implementation, the indication information 1 includes any one of radio resource control (radio resource control, RRC), a medium access control control element (medium access control control element, MAC CE), sidelink control information (sidelink control information, SCI), or the like. The indication information 1 is used to trigger the first communication apparatus to measure the first signal at a plurality of symbol locations. The locations of the plurality of symbols may be indicated by the second communication apparatus based on the indication information 1.

In a possible implementation, the indication information 1 further includes the symbol index A and the symbol index B. In other words, the second communication apparatus indicates the first communication apparatus to perform measurement on the symbol indicated by the symbol index A and obtain the measurement value A, and perform measurement on the symbol indicated by the symbol index B and obtain the measurement value B. In this way, the first communication apparatus separately performs measurement based on the symbol indicated by the symbol index A and the symbol indicated by the symbol index B that are carried in the indication information 1, and sequentially reports the measurement value A and the measurement value B in a sequence of the symbol indexes. In this way, the first communication apparatus measures the first signal at the symbol locations indicated by the second communication apparatus, and obtains the two measurement values.

Optionally, when the indication information 1 carries the symbol index A and the symbol index B, the measurement report 1 may include the symbol index A and the symbol index B, or may not include the symbol index A and the symbol index B. This is not limited in this application.

In a possible implementation, before S310, the method 300 further includes the following step:

S300b: The second communication apparatus sends information 1 (for example, first information) to the first communication apparatus, where the information 1 is used to schedule a first resource, and the first resource is used to transmit the first signal. The first resource includes the symbol indicated by the symbol index A.

Specifically, the second communication apparatus determines, based on a configuration of a resource pool, the first resource used to transmit the first signal, and sends the information 1 to the first communication apparatus, where the information 1 indicates the first resource used to transmit the first signal.

In a possible implementation, when the second communication apparatus indicates the first communication apparatus to report the plurality of symbol indexes and the plurality of measurement values, the first resource further includes the symbol indicated by the symbol index B. This helps the first communication apparatus measure the first signal at the symbol locations respectively indicated by the symbol index A and the symbol index B, to obtain the measurement value A and the measurement value B.

Correspondingly, the second communication apparatus sends the first signal to the first communication apparatus. Specifically, the second communication apparatus may send the first signal to the first communication apparatus on the first resource.

It should be understood that a sequence of performing S300b and S300a is not limited in this application. For ease of description, an example in which S300a is performed after S300b is used for description in this application.

In a possible implementation, the method 300 further includes the following step:

S340a: The first communication apparatus sends information 2 (for example, second information) to the second communication apparatus, where the information 2 is used to schedule a second resource, and the second resource is used to transmit a second signal.

Correspondingly, the second communication apparatus receives the information 2 sent by the first communication apparatus, and determines, based on the information 2, the second resource used by the first communication apparatus to transmit the second signal to the second communication apparatus.

It may be understood that S340a is performed before S340. In addition, a sequence of performing S340a and S330 is not limited in this application.

In a possible implementation, the measurement report 1 includes a first structure and a second structure. The first structure is used to carry the measurement value A, and the second structure is used to carry the slot identifier.

In a possible implementation, the first structure in the measurement report 1 is nr-UE-RxTxTimeDiff-r16, and the second structure is nr-TimeStamp-r16. For specific forms of the first structure and the second structure, refer to an existing standard. Details are not described in this application.

In addition, the symbol index A in the measurement report 1 may be carried in the first structure, that is, the symbol index A is carried in nr-UE-RxTxTimeDiff-r16, or the symbol index A is carried in nr-TimeStamp-r16. If the measurement report 1 further includes the measurement value B and the symbol index B, the measurement value B is carried in the first structure, and the symbol index B may be carried in the first structure or the second structure. In this way, compatibility with an existing measurement report can be implemented.

In a possible implementation, the first signal includes a plurality of sub-signals. For example, the first signal includes a first sub-signal and a second sub-signal. The plurality of sub-signals are located in a same slot.

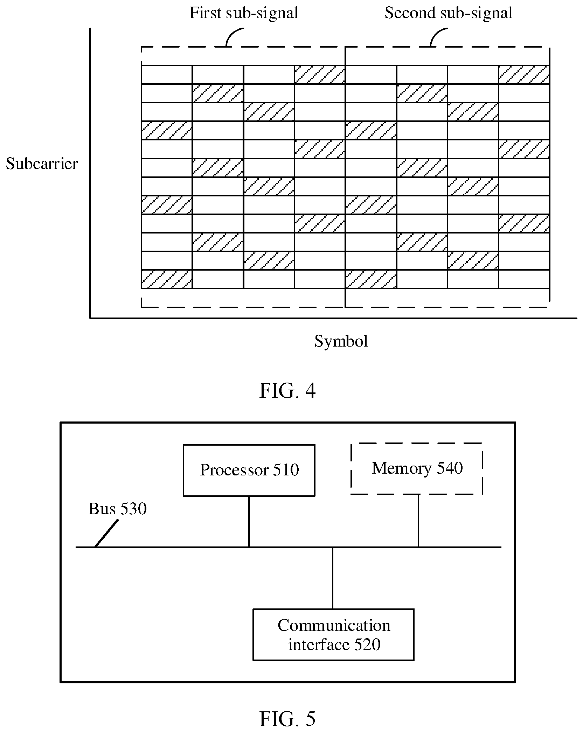

For example, the first signal includes the first sub-signal and the second sub-signal, and the first sub-signal and the second sub-signal respectively occupy different time-frequency resources. For descriptions of the first sub-signal and the second sub-signal, refer to FIG. 4.

FIG. 4 is a diagram of configurations of the first sub-signal and the second sub-signal. As shown in FIG. 4, the first signal occupies 12 subcarriers and eight symbols. The time-frequency resource occupied by the first sub-signal is the first four symbols and the 12 subcarriers, and the time-frequency resource occupied by the second sub-signal is the last four symbols and the 12 subcarriers. Each box with slash textures indicates a time-frequency resource used to transmit a positioning measurement signal, and a blank box indicates a time-frequency resource not used to transmit the positioning measurement signal.

Specifically, when the first signal uses a configuration form of a plurality of sub-signals, in this application, when the first communication apparatus is supported in reporting the measurement report 1 to the second communication apparatus, the measurement report 1 includes a measurement value corresponding to each sub-signal. The measurement report 1 may further include a symbol index and/or a sub-signal index corresponding to the measurement value.

In a possible implementation, if the first signal meets a configuration of comb (comb) 4 and the quantity of symbols occupied by the first signal is 8, the first sub-signal includes the first four symbols, and the second sub-signal includes the last four symbols. For descriptions of comb4, refer to the conventional technology. Details are not described in this application.

In a possible implementation, in this application, the measurement report 1 is supported in sequentially filling the measurement value corresponding to each sub-signal without including the symbol index and/or the sub-signal index. In this way, signaling overheads can be reduced.

It should be understood that content shown in FIG. 4 is merely an example for understanding, and is not used as a final limitation.

The foregoing describes the method embodiments in embodiments of this application, and the following describes corresponding apparatus embodiments.

To implement various functions in the foregoing methods provided in embodiments of this application, a terminal and a network device each may include a hardware structure and/or a software module, to implement the functions in a form of the hardware structure, the software module, or a combination of the hardware structure and the software module. Whether a function in the foregoing functions is performed by using the hardware structure, the software module, or the combination of the hardware structure and the software module depends on particular applications and design constraints of the technical solutions.

In embodiments of this application, communication apparatuses configured to perform a transceiver function and a processing function may be different communication apparatuses. For example, the second communication apparatus sends the first signal to the first communication apparatus, the second communication apparatus receives the measurement report of the first signal sent by the first communication apparatus, and the third communication apparatus determines the time of flight between the first communication apparatus and the second communication apparatus based on the first relationship, the measurement value A, and the symbol index A. For ease of description, in embodiments of this application, an example in which the second communication apparatus simultaneously performs the transceiver function and the processing function is used for description. However, a scenario in which the second communication apparatus performs the transceiver function and the third communication apparatus performs the processing function is not limited. This is described herein once for all.

FIG. 5 is a block diagram of a communication apparatus 500 according to an embodiment of this application. The communication apparatus 500 includes a processor 510 and a communication interface 520. The processor 510 and the communication interface 520 are connected to each other through a bus 530. The communication apparatus 500 shown in FIG. 5 may be a first communication apparatus, or may be a second communication apparatus.

Optionally, the communication apparatus 500 further includes a memory 540.

The memory 540 includes but is not limited to a random access memory (random access memory, RAM), a read-only memory (read-only memory, ROM), an erasable programmable read-only memory (erasable programmable read-only memory, EPROM), or a portable read-only memory (compact disc read-only memory, CD-ROM). The memory 540 is configured to store related instructions and data.

The processor 510 may be one or more central processing units (central processing unit, CPU). When the processor 510 is one CPU, the CPU may be a single-core CPU, or may be a multi-core CPU.

When the communication apparatus 500 is a first communication apparatus, the processor 510 is configured to read a computer program or instructions stored in the memory 540, and perform, for example, the following operations: receiving a first signal from a second communication apparatus, where the first signal is used for positioning between the first communication apparatus and the second communication apparatus; measuring the first signal to obtain a measurement report 1 of the first signal, where the measurement report 1 includes a measurement value A and a symbol index A, and the symbol index A indicates a symbol on which the measurement value A is obtained; sending the measurement report 1 to the second communication apparatus; and sending a second signal to the second communication apparatus, where the second signal is used for positioning between the first communication apparatus and the second communication apparatus.

For another example, the following operation may be performed: receiving indication information 1, where the indication information 1 indicates the first communication apparatus to obtain the measurement value A on the symbol indicated by the symbol index A, and obtain a measurement value B on a symbol indicated by a symbol index B.

For another example, the following operation may be performed: receiving information 1 from the second communication apparatus, where the information 1 is used to schedule a first resource, the first resource is used to transmit the first signal, and the first resource includes the symbol indicated by the symbol index A.

The content is merely used as an example for description. When the communication apparatus 500 is the first communication apparatus, the communication apparatus 500 is responsible for performing the methods or steps related to the first communication apparatus in the foregoing method embodiments. In addition, the first communication apparatus may be a terminal device or may be a network device.

When the communication apparatus 500 is a second communication apparatus, the processor 510 is configured to read a computer program or instructions stored in the memory 540, and perform, for example, the following operations: sending a first signal to a first communication apparatus, where the first signal is used for positioning between the first communication apparatus and the second communication apparatus; receiving a measurement report 1 of the first signal from the first communication apparatus, where the measurement report 1 includes a measurement value A and a symbol index A, and the symbol index A indicates a symbol on which the measurement value A is obtained; receiving a second signal from the first communication apparatus, where the second signal is used for positioning between the second communication apparatus and the first communication apparatus; measuring the second signal to obtain a measurement report 2 of the second signal, where the measurement report 2 includes a measurement value C; and determining time of flight between the first communication apparatus and the second communication apparatus based on a first relationship, the measurement value A, the measurement value C, and the symbol index A, where the first relationship indicates a relationship between a clock crystal oscillator error of the first communication apparatus and a clock crystal oscillator error of the second communication apparatus.

For another example, the following operation may be performed: sending indication information 1 to the first communication apparatus, where the indication information 1 indicates the first communication apparatus to obtain the measurement value A on the symbol indicated by the symbol index A, and obtain a measurement value B on a symbol indicated by a symbol index B.

For another example, the following operation may be performed: sending information 1 to the first communication apparatus, where the information 1 is used to schedule a first resource, the first resource is used to transmit the first signal, and the first resource includes the symbol indicated by the symbol index A.

The content is merely used as an example for description. When the communication apparatus 500 is the second communication apparatus, the communication apparatus 500 is responsible for performing the methods or steps related to the second communication apparatus in the foregoing method embodiments. The second communication apparatus may be a terminal device or may be a network device.

The foregoing descriptions are merely an example for description. For specific content, refer to the content shown in the foregoing method embodiments. In addition, for implementation of each operation in FIG. 5, refer to the corresponding descriptions in the method embodiments shown in FIG. 3 and FIG. 4.

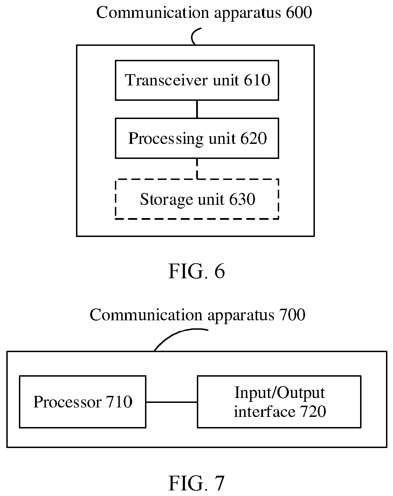

FIG. 6 is a block diagram of a communication apparatus 600 according to an embodiment of this application. The communication apparatus 600 may be the first communication apparatus or the second communication apparatus in the foregoing embodiments, or may be a chip or a module in the first communication apparatus or the second communication apparatus, and is configured to implement the method in the foregoing embodiments. The communication apparatus 600 includes a transceiver unit 610 and a processing unit 620. The following describes the transceiver unit 610 and the processing unit 620 by using examples.

The transceiver unit 610 may include a sending unit and a receiving unit that are respectively configured to implement a sending function or a receiving function in the foregoing method embodiments. The transceiver unit 610 may further include a processing unit, configured to implement a function other than the sending function or the receiving function.

For example, when the communication apparatus 600 is a first communication apparatus, the transceiver unit 610 is configured to receive a first signal from a second communication apparatus, where the first signal is used for positioning between the first communication apparatus and the second communication apparatus; the processing unit 620 is configured to measure the first signal to obtain a measurement report 1 of the first signal; the transceiver unit 610 is further configured to send the measurement report 1 to the second communication apparatus, where the measurement report 1 includes a measurement value A and a symbol index A, and the symbol index A indicates a symbol on which the measurement value A is obtained; and the transceiver unit 610 is further configured to send a second signal to the second communication apparatus, where the second signal is used for positioning between the second communication apparatus and the first communication apparatus.

Optionally, the communication apparatus 600 further includes a storage unit 630, configured to store a program or code used to perform the foregoing method.

The content is merely used as an example for description. When the communication apparatus 600 is the first communication apparatus, the communication apparatus 600 is responsible for performing the methods or steps related to the first communication apparatus in the foregoing method embodiments.

For example, when the communication apparatus 600 is a second communication apparatus, the transceiver unit 610 is configured to send a first signal to a first communication apparatus, where the first signal is used for positioning between the first communication apparatus and the second communication apparatus; the transceiver unit 610 is further configured to receive a measurement report 1 of the first signal from the first communication apparatus, where the measurement report 1 includes a measurement value A and a symbol index A, and the symbol index A indicates a symbol on which the measurement value A is obtained; the transceiver unit 610 is further configured to receive a second signal from the first communication apparatus, where the second signal is used for positioning between the first communication apparatus and the second communication apparatus; the processing unit 620 is configured to measure the second signal to obtain a measurement report 2 of the second signal, where the measurement report 2 includes a measurement value C; and the processing unit 620 is configured to determine time of flight between the first communication apparatus and the second communication apparatus based on a first relationship, the measurement value A, the measurement value C, and the symbol index A, where the first relationship indicates a relationship between a clock crystal oscillator error of the first communication apparatus and a clock crystal oscillator error of the second communication apparatus.

Optionally, the communication apparatus 600 further includes a storage unit 630, configured to store a program or code used to perform the foregoing method.

The content is merely used as an example for description. When the communication apparatus 600 is the second communication apparatus, the communication apparatus 600 is responsible for performing the methods or steps related to the second communication apparatus in the foregoing method embodiments.

In addition, for implementation of each operation in FIG. 6, refer to the corresponding descriptions of the methods shown in the foregoing embodiments. Details are not described herein again.

The apparatus embodiments shown in FIG. 5 and FIG. 6 are used to implement the content described in the foregoing method embodiments shown in FIG. 3 and FIG. 4. Therefore, for specific execution steps and methods of the apparatuses shown in FIG. 5 and FIG. 6, refer to the content described in the foregoing method embodiments.

It should be understood that the transceiver unit may include a sending unit and a receiving unit. The sending unit is configured to perform a sending action of the communication apparatus, and the receiving unit is configured to perform a receiving action of the communication apparatus. For ease of description, in this embodiment of this application, the sending unit and the receiving unit are combined into one transceiver unit. This is described herein once for all. Details are not described below again.

FIG. 7 is a diagram of a communication apparatus 700 according to an embodiment of this application. The communication apparatus 700 may be configured to implement a function of the first communication apparatus or the second communication apparatus in the foregoing method. The communication apparatus 700 may be a chip in the first communication apparatus or the second communication apparatus.

The communication apparatus 700 includes an input/output interface 720 and a processor 710. The input/output interface 720 may be an input/output circuit. The processor 710 may be a signal processor, a chip, or another integrated circuit that can implement the methods in this application. The input/output interface 720 is configured to input or output a signal or data.

For example, when the communication apparatus 700 is a first communication apparatus, the input/output interface 720 is configured to receive a first signal from a second communication apparatus, where the first signal is used for positioning between the first communication apparatus and the second communication apparatus. The input/output interface 720 is further configured to send a measurement report 1 to the second communication apparatus, where the measurement report 1 includes a measurement value A and a symbol index A, and the symbol index A indicates a symbol on which the measurement value A is obtained. The input/output interface 720 is further configured to send a second signal to the second communication apparatus, where the second signal is used for positioning between the second communication apparatus and the first communication apparatus. The processor 710 is configured to measure the first signal to obtain the measurement report 1 of the first signal.

For example, when the communication apparatus 700 is a second communication apparatus, the input/output interface 720 is configured to send a first signal to a first communication apparatus, where the first signal is used for positioning between the first communication apparatus and the second communication apparatus. The input/output interface 720 is further configured to receive a measurement report 1 from the first communication apparatus, where the measurement report 1 includes a measurement value A and a symbol index A, and the symbol index A indicates a symbol on which the measurement value A is obtained. The input/output interface 720 is further configured to receive a second signal from the first communication apparatus, where the second signal is used for positioning between the first communication apparatus and the second communication apparatus. The processor 710 is configured to measure the second signal to obtain a measurement report 2 of the second signal, where the measurement report 2 includes a measurement value C. The processor 710 is further configured to determine time of flight between the first communication apparatus and the second communication apparatus based on a first relationship, the measurement value A, the measurement value C, and the symbol index A, where the first relationship indicates a relationship between a clock crystal oscillator error of the first communication apparatus and a clock crystal oscillator error of the second communication apparatus.

In a possible implementation, the processor 710 executes instructions stored in a memory, to implement a function implemented by a network device or a terminal device.

Optionally, the communication apparatus 700 further includes a memory.

Optionally, the processor and the memory are integrated together.

Optionally, the memory is outside the communication apparatus 700.

In a possible implementation, the processor 710 may be a logic circuit, and the processor 710 inputs/outputs a message or signaling through the input/output interface 720. The logic circuit may be a signal processor, a chip, or another integrated circuit that can implement the methods in embodiments of this application.

The foregoing descriptions of the apparatus in FIG. 7 are merely an example for description. The apparatus can be configured to perform the methods in the foregoing embodiments. For specific content, refer to the descriptions of the foregoing method embodiments. Details are not described herein again.

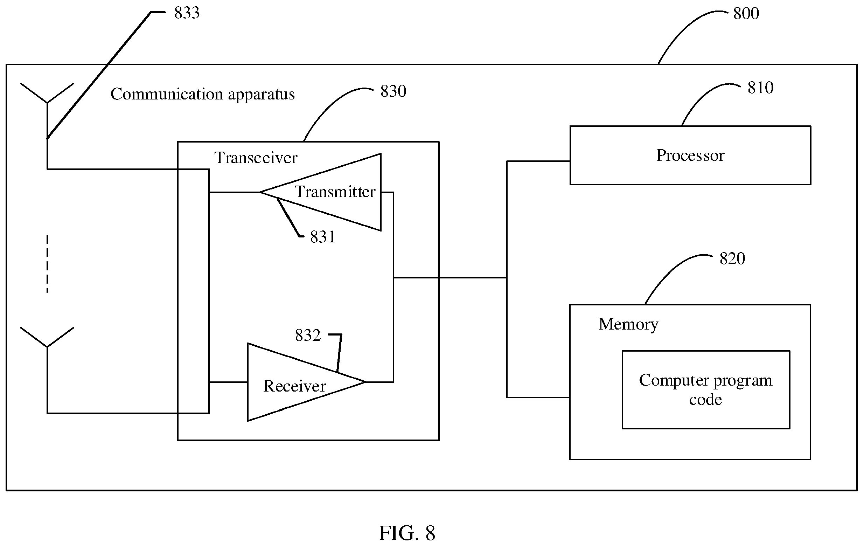

FIG. 8 is a block diagram of a communication apparatus 800 according to an embodiment of this application. The communication apparatus 800 may be a network device or a chip. The communication apparatus 800 may be configured to perform an operation performed by the first communication apparatus in the method embodiment shown in FIG. 3.

When the communication apparatus 800 is a network device (the first communication apparatus or the second communication apparatus is a network device), for example, a base station, FIG. 8 is a diagram of a simplified structure of the base station. The base station includes a part 810, a part 820, and a part 830. The part 810 is mainly configured to: perform baseband processing, control the base station, and the like. The part 810 is usually a control center of the base station, may be usually referred to as a processor, and is configured to control the base station to perform a processing operation on a network device side in the foregoing method embodiments. The part 820 is mainly configured to store computer program code and data. The part 830 is mainly configured to: receive and send a radio frequency signal, and perform conversion between a radio frequency signal and a baseband signal. The part 830 may be usually referred to as a transceiver module, a transceiver machine, a transceiver circuit, a transceiver, or the like. The transceiver module in the part 830 may also be referred to as a transceiver machine, a transceiver, or the like, and includes an antenna 833 and a radio frequency circuit (not shown in the figure). The radio frequency circuit is mainly configured to perform radio frequency processing. Optionally, in the part 830, a component configured to implement a receiving function may be considered as a receiver, and a component configured to implement a sending function may be considered as a transmitter. In other words, the part 830 includes a receiver 832 and a transmitter 831. The receiver may also be referred to as a receiving module, a receiver machine, a receiver circuit, or the like, and the transmitter may be referred to as a transmitting module, a transmitter machine, a transmitter circuit, or the like.

The part 810 and the part 820 may include one or more boards, and each board may include one or more processors and one or more memories. The processor is configured to read and execute a program in the memory, to implement a baseband processing function and control the base station. If there are a plurality of boards, the boards may be interconnected with each other to enhance a processing capability. In an optional implementation, a plurality of boards may share one or more processors, a plurality of boards share one or more memories, or a plurality of boards simultaneously share one or more processors.

For example, in an implementation, the transceiver module in the part 830 is configured to perform a receiving and sending-related process performed by the network device in the embodiment shown in FIG. 3. The processor in the part 810 is configured to perform a processing-related process performed by the network device in the embodiment shown in FIG. 3.

In another implementation, the processor in the part 810 is configured to perform a processing-related process performed by the communication device in the embodiment shown in FIG. 3.

In another implementation, the transceiver module in the part 830 is configured to perform a receiving and sending-related process performed by the communication device in the embodiment shown in FIG. 3.

It should be understood that FIG. 8 is merely an example rather than a limitation. The network device including the processor, the memory, and the transceiver may not depend on the structures shown in FIG. 5 to FIG. 7.

When the communication apparatus 800 is a chip, the chip includes a transceiver, a memory, and a processor. The transceiver may be an input/output circuit or a communication interface. The processor is a processor, a microprocessor, or an integrated circuit integrated on the chip. A sending operation performed by the network device in the foregoing method embodiments may be understood as an output of the chip, and a receiving operation performed by the network device in the foregoing method embodiments may be understood as an input of the chip.

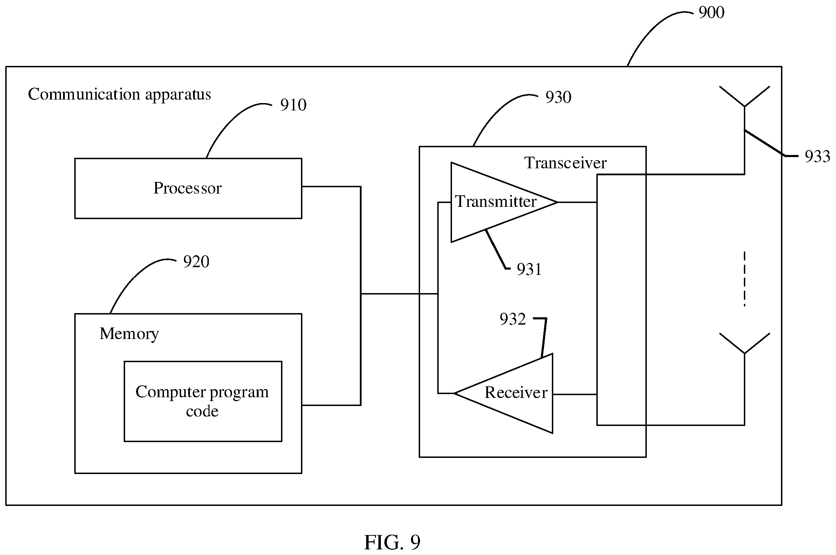

FIG. 9 is a block diagram of a communication apparatus 900 according to an embodiment of this application. The communication apparatus 900 may be a terminal device, a processor of a terminal device, or a chip. The communication apparatus 900 may be configured to perform an operation performed by the terminal device or the communication device in the foregoing method embodiments.

When the communication apparatus 900 is a terminal device (the first communication apparatus or the second communication apparatus is a terminal device), FIG. 9 is a diagram of a simplified structure of the terminal device. As shown in FIG. 9, the terminal device includes a processor, a memory, and a transceiver. The memory may store computer program code. The transceiver includes a transmitter 931, a receiver 932, a radio frequency circuit (not shown in the figure), an antenna 933, and an input/output apparatus (not shown in the figure).

The processor is mainly configured to: process a communication protocol and communication data, control the terminal device, execute a software program, process data of the software program, and the like. The memory is mainly configured to store the software program and data. The radio frequency circuit is mainly configured to: perform conversion between a baseband signal and a radio frequency signal, and process the radio frequency signal. The antenna is mainly configured to receive and send a radio frequency signal in a form of an electromagnetic wave. The input/output apparatus, for example, a touchscreen, a display, or a keyboard, is mainly configured to receive data input by a user and output data to the user. It should be noted that some types of terminal devices may not have an input/output apparatus.

When data needs to be sent, after performing baseband processing on the to-be-sent data, the processor outputs a baseband signal to the radio frequency circuit. After performing radio frequency processing on the baseband signal, the radio frequency circuit sends a radio frequency signal in an electromagnetic wave form via the antenna. When data is sent to the terminal device, the radio frequency circuit receives the radio frequency signal via the antenna, converts the radio frequency signal into a baseband signal, and outputs the baseband signal to the processor. The processor converts the baseband signal into data, and processes the data. For ease of description, FIG. 9 shows only one memory, one processor, and one transceiver. In an actual terminal device product, there may be one or more processors and one or more memories. The memory may also be referred to as a storage medium, a storage device, or the like. The memory may be disposed independent of the processor, or may be integrated with the processor. This is not limited in embodiments of this application.

In this embodiment of this application, the antenna and the radio frequency circuit that have a transceiver function may be considered as a transceiver module of the terminal device, and the processor that has a processing function may be considered as a processing module of the terminal device.

As shown in FIG. 9, the terminal device includes a processor 910, a memory 920, and a transceiver 930. The processor 910 may also be referred to as a processing unit, a processing board, a processing module, a processing apparatus, or the like. The transceiver 930 may also be referred to as a transceiver unit, a transceiver machine, a transceiver apparatus, or the like.

Optionally, a component for implementing a receiving function in the transceiver 930 may be considered as a receiving module, and a component for implementing a sending function in the transceiver 930 may be considered as a sending module. In other words, the transceiver 930 includes a receiver and a transmitter. The transceiver may also be sometimes referred to as a transceiver machine, a transceiver module, a transceiver circuit, or the like. The receiver may also be sometimes referred to as a receiver machine, a receiving module, a receiver circuit, or the like. The transmitter may also be sometimes referred to as a transmitter machine, a transmitting module, a transmitter circuit, or the like.

For example, in an implementation, the processor 910 is configured to perform a processing action on a terminal device side in the embodiment shown in FIG. 3, and the transceiver 930 is configured to perform a transceiver action on the terminal device side in FIG. 3.

For example, in an implementation, the processor 910 is configured to perform a processing action on a terminal device side in the embodiment shown in FIG. 3, and the transceiver 930 is configured to perform a transceiver action on the terminal device side in FIG. 3.

It should be understood that FIG. 9 is merely an example rather than a limitation. The terminal device including the transceiver module and the processing module may not depend on the structures shown in FIG. 5 to FIG. 7.

When the communication apparatus 900 is a chip, the chip includes a processor, a memory, and a transceiver. The transceiver may be an input/output circuit or a communication interface. The processor may be a processing module, a microprocessor, or an integrated circuit integrated on the chip. A sending operation performed by the terminal device in the foregoing method embodiments may be understood as an output of the chip, and a receiving operation performed by the terminal device in the foregoing method embodiments may be understood as an input of the chip.

This application further provides a chip, including a processor, configured to: invoke, from a memory, and run instructions stored in the memory, to enable a communication device in which the chip is installed to perform the methods in the foregoing examples.

This application further provides another chip, including an input interface, an output interface, and a processor. The input interface, the output interface, and the processor are connected through an internal connection path, the processor is configured to execute code in a memory, and when the code is executed, the processor is configured to perform the methods in the foregoing examples. Optionally, the chip further includes a memory. The memory is configured to store a computer program or code.

This application further provides a processor, configured to be coupled to a memory, and configured to perform the method and function related to a network device or a terminal device in any one of the foregoing embodiments.

Another embodiment of this application provides a computer program product including instructions. When the computer program product is run on a computer, the method in the foregoing embodiments is implemented.

This application further provides a computer program. When the computer program is run on a computer, the method in the foregoing embodiments is implemented.

Another embodiment of this application provides a computer-readable storage medium. The computer-readable storage medium stores a computer program. When the computer program is executed by a computer, the method in the foregoing embodiments is implemented.

In the descriptions of embodiments of this application, unless otherwise specified, "a plurality of" means two or more. "At least one of the following items (pieces)" or a similar expression thereof refers to any combination of these items, including any combination of singular items (pieces) or plural items (pieces). For example, at least one item (piece) of a, b, or c may indicate a, b, c, a and b, a and c, b and c, or a, b, and c, where a, b, and c may be singular or plural.

In addition, to clearly describe the technical solutions in embodiments of this application, terms such as "first" and "second" are used in embodiments of this application to distinguish between same items or similar items that provide basically same functions or purposes. A person skilled in the art may understand that the terms such as "first" and "second" do not limit a quantity or an execution sequence, and the terms such as "first" and "second" do not indicate a definite difference. In addition, in embodiments of this application, words such as "example" or "for example" indicate giving an example, an illustration, or a description.

Any embodiment or design solution described as an "example" or "for example" in embodiments of this application should not be explained as being more preferred or having more advantages than another embodiment or design solution. To be precise, use of the terms such as "example" or "for example" is intended to present a related concept in a specific manner for ease of understanding.

Unless otherwise specified, a character "/" in the descriptions of embodiments of this application indicates an "or" relationship between associated objects. For example, A/B may indicate A or B. In this application, a term "and/or" describes only an association relationship between the associated objects and indicates that three relationships may exist. For example, A and/or B may indicate three cases: Only A exists, both A and B exist, and only B exists, where A and B may be singular or plural.

It should be understood that "one embodiment" or "an embodiment" mentioned throughout the specification means that particular features, structures, or characteristics related to the embodiment are included in at least one embodiment of this application.

Therefore, "in one embodiment" or "in an embodiment" appearing throughout the specification does not necessarily refer to a same embodiment. In addition, these particular features, structures, or characteristics may be combined in one or more embodiments in any proper manner.

Sequence numbers of the foregoing processes do not mean execution sequences in embodiments of this application. The execution sequences of the processes should be determined based on functions and internal logic of the processes, and should not constitute any limitation on implementation processes of embodiments of this application.

It may be understood that an "embodiment" mentioned throughout the specification means that particular features, structures, or characteristics related to the embodiment are included in at least one embodiment of this application.

Therefore, embodiments in the entire specification does not necessarily refer to a same embodiment. In addition, these particular features, structures, or characteristics may be combined in one or more embodiments in any proper manner.

It may be understood that sequence numbers of the processes do not mean execution sequences in embodiments of this application. The execution sequences of the processes should be determined based on functions and internal logic of the processes, and should not constitute any limitation on implementation processes of embodiments of this application.

A person of ordinary skill in the art may be aware that units and algorithm steps in the examples described with reference to embodiments disclosed in this specification can be implemented by electronic hardware, or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

A person skilled in the art may clearly understand that, for convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in an actual implementation. For example, a plurality of units or components may be combined or integrated into another system, or some features may be ignored or not performed.

In addition, the displayed or discussed mutual couplings or direct couplings or communication connections may be implemented through some interfaces. The indirect couplings or communication connections between the apparatuses or units may be implemented in electronic, mechanical, or other forms.

The units described as separate components may or may not be physically separate, and components displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, each of the units may exist alone physically, or two or more units may be integrated into one unit.

When the functions are implemented in the form of a software functional unit and sold or used as an independent product, the functions may be stored in a computer-readable storage medium. Based on such an understanding, the technical solutions of embodiments of this application essentially, or the part contributing to the conventional technology, or some of the technical solutions may be implemented in a form of a software product. The computer software product is stored in a storage medium, and includes several instructions for instructing a computer device (which may be a personal computer, a server, or a network device) to perform all or some of the steps of the methods described in embodiments of this application. The foregoing storage medium includes any medium that can store program code, for example, a USB flash drive, a removable hard disk, a ROM, a RAM, a magnetic disk, or an optical disc.

The foregoing descriptions are merely specific implementations of embodiments of this application, but are not intended to limit the protection scope of embodiments of this application. Any variation or replacement readily figured out by a person skilled in the art within the technical scope disclosed in embodiments of this application shall fall within the protection scope of embodiments of this application. Therefore, the protection scope of embodiments of this application should be subject to the protection scope of the claims.

## Claims

1. A positioning method, comprising:

   sending a first signal to a first communication apparatus, wherein the first signal is used for positioning between the first communication apparatus and a second communication apparatus;
   receiving a first measurement report of the first signal from the first communication apparatus, wherein the first measurement report comprises a first measurement value and a first symbol index, and the first symbol index indicates a symbol on which the first communication apparatus obtains the first measurement value;
   receiving a second signal from the first communication apparatus, wherein the second signal is used for positioning between the first communication apparatus and the second communication apparatus;
   measuring the second signal to obtain a second measurement report of the second signal, wherein the second measurement report comprises a third measurement value; and
   determining time of flight between the first communication apparatus and the second communication apparatus based on a first relationship, the first measurement value, the third measurement value, and the first symbol index, wherein the first relationship indicates a relationship between a clock crystal oscillator error of the first communication apparatus and a clock crystal oscillator error of the second communication apparatus.

2. A positioning method, comprising:

   receiving a first signal from a second communication apparatus, wherein the first signal is used for positioning between a first communication apparatus and the second communication apparatus;
   measuring the first signal to obtain a first measurement report of the first signal, wherein the first measurement report comprises a first measurement value and a first symbol index, and the first symbol index indicates a symbol on which the first communication apparatus obtains the first measurement value;
sending the first measurement report to the second communication apparatus; and
sending a second signal to the second communication apparatus, wherein the second signal is used for positioning between the first communication apparatus and the second communication apparatus.

3. The method according to claim 1, wherein the method further comprises:

sending indication information to the first communication apparatus, wherein
the indication information indicates the first communication apparatus to obtain the first measurement value on the symbol indicated by the first symbol index, and obtain a second measurement value on a symbol indicated by a second symbol index, wherein the second symbol index indicates the symbol on which the first communication apparatus obtains the second measurement value.

4. The method according to claim 2, wherein the method further comprises:

receiving indication information from the second communication apparatus, wherein
the indication information indicates the first communication apparatus to obtain the first measurement value on the symbol indicated by the first symbol index, and obtain a second measurement value on a symbol indicated by a second symbol index, wherein the second symbol index indicates the symbol on which the first communication apparatus obtains the second measurement value.

5. The method according to claim 3 or 4, wherein the indication information comprises the first symbol index and the second symbol index.

6. The method according to any one of claims 3 to 5, wherein

the first measurement report further comprises the second measurement value and the second symbol index; and
the first measurement value, the first symbol index, the second measurement value, and the second symbol index are used to determine the first relationship.

7. The method according to any one of claims 1 to 6, wherein

the first measurement report comprises a first structure and a second structure;
the first structure is used to carry the first measurement value; and
the first symbol index is carried in the first structure or the second structure.

8. The method according to claim 7, wherein

the first measurement report further comprises the second symbol index and the second measurement value;
the first structure is further used to carry the second measurement value; and
the second symbol index is carried in the first structure or the second structure.

9. The method according to any one of claims 1, 3, and 5 to 8, wherein the method further comprises:

sending first information to the first communication apparatus, wherein
the first information is used to schedule a first resource, the first resource is used to transmit the first signal, and the first resource comprises the symbol indicated by the first symbol index.

10. The method according to any one of claims 2 and 4 to 8, wherein the method further comprises:

receiving first information from the second communication apparatus, wherein
the first information is used to schedule a first resource, the first resource is used to transmit the first signal, and the first resource comprises the symbol indicated by the first symbol index.

11. The method according to any one of claims 1, 3, and 5 to 9, wherein the method further comprises:

receiving second information from the first communication apparatus, wherein
the second information is used to schedule a second resource, and the second resource is used to transmit the second signal.

12. The method according to any one of claims 2, 4 to 8, and 10, wherein the method further comprises:
sending second information to the second communication apparatus, wherein the second information is used to schedule a second resource, and the second resource is used to transmit the second signal.

13. The method according to any one of claims 1 to 12, wherein
the first measurement report further comprises a slot identifier, and the slot identifier indicates a receiving slot of the first signal.

14. The method according to any one of claims 1 to 13, wherein
the first signal comprises a first sub-signal and a second sub-signal, and the first sub-signal and the second sub-signal are located in a same slot.

15. A communication apparatus, comprising a processor, wherein the processor is configured to enable, by executing a computer program or instructions or by using a logic circuit, the communication apparatus to perform the method according to any one of claims 1 to 14.

16. The communication apparatus according to claim 15, wherein the communication apparatus further comprises a memory, and the memory is configured to store the computer program or the instructions.

17. The communication apparatus according to claim 15 or 16, wherein the communication apparatus further comprises a communication interface, and the communication interface is configured to input and/or output a signal.

18. A communication apparatus, comprising a logic circuit and an input/output interface, wherein the input/output interface is configured to input and/or output a signal, and the logic circuit is configured to perform the method according to any one of claims 1 to 14.

19. A computer-readable storage medium, comprising a computer program or instructions, wherein when the computer program or the instructions are run on a computer, the method according to any one of claims 1 to 14 is performed.

20. A computer program product, comprising instructions, wherein when the instructions are run on a computer, the method according to any one of claims 1 to 14 is performed.

21. A computer program, wherein when the computer program is run on a computer, the method according to any one of claims 1 to 14 is performed.

22. A communication system, wherein the communication system comprises a first communication apparatus and a second communication apparatus;

the first communication apparatus is configured to perform the method according to any one of claims 2, 4 to 8, 10, and 12 to 14; and
the second communication apparatus is configured to perform the method according to any one of claims 1, 3, 5 to 9, 11, and 13 and 14.

Network device
110

Uu

Uu

Terminal device
120

PC5

Terminal device
130

FIG. 1

Terminal
device A

Terminal
device B

T1

PRS 1

T2

PRS 2

T3

T4

FIG. 2

| First communication apparatus | | Second communication apparatus |
| --- | --- | --- |

S300a: Send indication information 1, where the indication information 1 indicates to obtain a measurement value A on a symbol indicated by a symbol index A, and obtain a measurement value B on a symbol indicated by a symbol index B

S300b: Send information 1, where the information 1 is used to schedule a first resource, and the first resource is used to transmit a first signal

S310: Send the first signal, where the first signal is used for positioning between the first communication apparatus and the second communication apparatus

S320: Measure the first signal to obtain a measurement report 1, where the measurement report 1 includes the symbol index A and the measurement value A

S330: Send the measurement report 1

S340a: Send information 2, where the information 2 is used to schedule a second resource, and the second resource is used to transmit a second signal

S340: Send the second signal, where the second signal is used for positioning between the first communication apparatus and the second communication apparatus

S350: Measure the second signal to obtain a measurement report 2, where the measurement report 2 includes a measurement value C

S360: Determine time of flight between the first communication apparatus and the second communication apparatus based on a first relationship, the symbol index A, the measurement value A, and the measurement value C

FIG. 3

First sub-signal      Second sub-signal

Subcarrier

Symbol

FIG. 4

Processor 510          Memory 540

Bus 530

Communication
interface 520

FIG. 5

Communication apparatus 600

Transceiver unit 610

Processing unit 620

Storage unit 630

FIG. 6

Communication apparatus 700

Processor 710

Input/Output interface 720

FIG. 7

FIG. 8

FIG. 9

EP 4 586 651 A1

**EP 4 586 651 A1**

## INTERNATIONAL SEARCH REPORT

| International application No. |
|---|
| **PCT/CN2023/116934** |

### A. CLASSIFICATION OF SUBJECT MATTER

H04W4/02(2018.01)i

According to International Patent Classification (IPC) or to both national classification and IPC

### B. FIELDS SEARCHED

Minimum documentation searched (classification system followed by classification symbols)

IPC:H04W,H04Q,G01S

Documentation searched other than minimum documentation to the extent that such documents are included in the fields searched

Electronic data base consulted during the international search (name of data base and, where practicable, search terms used)

3GPP, CNTXT, ENTXT, ENTXTC, DWPI, WPABS: 旁, 侧, 链路, 定位, 测量, 报告, 值, 第一, 第二, 飞行时间, 时钟, 误差, 偏差, 符号, 时域, 索引, 指示, sidelink, sl, positioning, prs, measure, report, value, first, second, tof, clock, deviation, error, symbol, index, indicate

### C. DOCUMENTS CONSIDERED TO BE RELEVANT

| Category* | Citation of document, with indication, where appropriate, of the relevant passages | Relevant to claim No. |
|---|---|---|
| Y | US 2022150863 A1 (QUALCOMM INC.) 12 May 2022 (2022-05-12) description, paragraphs [0083]-[0124] | 1-22 |
| Y | WO 2021097598 A1 (HUAWEI TECHNOLOGIES CO., LTD.) 27 May 2021 (2021-05-27) description, pages 10-13 | 1-22 |
| Y | HUAWEI et al. "R1-2203164, Discussion on solutions to support SL positioning" *3GPP TSG-RAN WG1 Meeting #109-e*, 20 May 2022 (2022-05-20), sections 2-5 | 1-22 |
| A | CN 112970275 A (FG INNOVATION CO., LTD.) 15 June 2021 (2021-06-15) entire document | 1-22 |
| A | US 2015350936 A1 (INTEL IP CORP.) 03 December 2015 (2015-12-03) entire document | 1-22 |
| A | WO 2018106467 A1 (INTEL IP CORP.) 14 June 2018 (2018-06-14) entire document | 1-22 |

☑ Further documents are listed in the continuation of Box C.  ☑ See patent family annex.

| | |
|---|---|
| * Special categories of cited documents: <br> "A" document defining the general state of the art which is not considered to be of particular relevance <br> "D" document cited by the applicant in the international application <br> "E" earlier application or patent but published on or after the international filing date <br> "L" document which may throw doubts on priority claim(s) or which is cited to establish the publication date of another citation or other special reason (as specified) <br> "O" document referring to an oral disclosure, use, exhibition or other means <br> "P" document published prior to the international filing date but later than the priority date claimed | "T" later document published after the international filing date or priority date and not in conflict with the application but cited to understand the principle or theory underlying the invention <br> "X" document of particular relevance; the claimed invention cannot be considered novel or cannot be considered to involve an inventive step when the document is taken alone <br> "Y" document of particular relevance; the claimed invention cannot be considered to involve an inventive step when the document is combined with one or more other such documents, such combination being obvious to a person skilled in the art <br> "&" document member of the same patent family |

| Date of the actual completion of the international search | Date of mailing of the international search report |
|---|---|
| **02 November 2023** | **10 November 2023** |

| Name and mailing address of the ISA/CN | Authorized officer |
|---|---|
| **China National Intellectual Property Administration (ISA/CN)** <br> **China No. 6, Xitucheng Road, Jimenqiao, Haidian District, Beijing 100088** | |
| | Telephone No. |

Form PCT/ISA/210 (second sheet) (July 2022)

## INTERNATIONAL SEARCH REPORT

| International application No. |
| --- |
| **PCT/CN2023/116934** |

**C.      DOCUMENTS CONSIDERED TO BE RELEVANT**

| Category* | Citation of document, with indication, where appropriate, of the relevant passages | Relevant to claim No. |
| --- | --- | --- |
| A | WO 2021167393 A1 (LG ELECTRONICS INC.) 26 August 2021 (2021-08-26)<br>entire document | 1-22 |

Form PCT/ISA/210 (second sheet) (July 2022)

**INTERNATIONAL SEARCH REPORT**
Information on patent family members

International application No.

**PCT/CN2023/116934**

| Patent document cited in search report | | | Publication date (day/month/year) | Patent family member(s) | | | Publication date (day/month/year) |
|---|---|---|---|---|---|---|---|
| US | 2022150863 | A1 | 12 May 2022 | WO | 2022098417 | A1 | 12 May 2022 |
| | | | | TW | 202220460 | A | 16 May 2022 |
| | | | | EP | 4241101 | A1 | 13 September 2023 |
| WO | 2021097598 | A1 | 27 May 2021 | AU | 2019475080 | A1 | 16 June 2022 |
| | | | | US | 2022279313 | A1 | 01 September 2022 |
| | | | | EP | 4054258 | A1 | 07 September 2022 |
| | | | | CN | 114731638 | A | 08 July 2022 |
| CN | 112970275 | A | 15 June 2021 | US | 2022022082 | A1 | 20 January 2022 |
| | | | | WO | 2020088655 | A1 | 07 May 2020 |
| | | | | US | 2020145867 | A1 | 07 May 2020 |
| | | | | EP | 3874779 | A1 | 08 September 2021 |
| US | 2015350936 | A1 | 03 December 2015 | JP | 2017517975 | A | 29 June 2017 |
| | | | | US | 2018098231 | A1 | 05 April 2018 |
| | | | | US | 2018376356 | A1 | 27 December 2018 |
| | | | | WO | 2015187513 | A1 | 10 December 2015 |
| | | | | CN | 106233768 | A | 14 December 2016 |
| | | | | CN | 108271187 | A | 10 July 2018 |
| WO | 2018106467 | A1 | 14 June 2018 | | None | | |
| WO | 2021167393 | A1 | 26 August 2021 | US | 2023076030 | A1 | 09 March 2023 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202211457230
- CN 202211231689X